# EUROPÄISCHE PATENTSCHRIFT

(11) **EP 2 859 987 B1**
(45) Veröffentlichungstag und Bekanntmachung des Hinweises auf die Patenterteilung: **08.02.2017**
(21) Anmeldenummer: 13187685.6
(22) Anmeldetag: 08.10.2013
(51) Int. Cl.: B23K 35/02, F16B 5/08

(54) **Bauteilverbund**
Component Assembly
Composé d'éléments de construction

(43) Veröffentlichungstag der Anmeldung: 15.04.2015
(73) Patentinhaber: MAGNA STEYR Fahrzeugtechnik AG & Co KG, 8041 Graz (AT)
(72) Erfinder: Mayr, Franz, 8323 St.Marein bei Graz (AT)
(74) Vertreter: Zangger, Bernd

(56) Entgegenhaltungen:
- WO-A1-2005/046921
- DE-A1- 3 210 310
- DE-A1-102004 025 492
- GB-A- 567 418
- US-A1- 2005 051 607

## Beschreibung

### Gebiet der Erfindung

Die vorliegende Erfindung betrifft einen Bauteilverbund umfassend einen ersten Bauteil und einen zweiten Bauteil, weiters umfassend mehrere Verbindungsstücke. Die Verbindungsstücke durchdringen zumindest über die gesamte Dicke des ersten Bauteils den ersten Bauteil.

### Stand der Technik

Derartige Bauteilverbunde können beispielsweise als Verbunde von Kunststoff- oder Faserverbundplatten im Fahrzeugbau verwendet werden. Üblich ist es die Bauteile miteinander zu verkleben, zu nieten oder thermisch zu pressen. Jedoch ist die Qualität der bekannten Klebe- und Pressverbindungen gerade bei industrieller Fertigung in großen Stückzahlen oft mangelhaft bzw. uneinheitlich. Manche Verbindungsverfahren sind nur aufwendig oder gar nicht anwendbar, wenn die Zugänglichkeit für erforderliche Werkzeuge, wie etwa Schweißgeräte, nicht gegeben ist. Gerade bei Schweißverfahren kann es zu unerwünscht hohen thermischen Belastungen für die zu verbindenden Bauteile kommen. Auch kann die Herstellung einer großen Zahl von Verbindungspunkten zwischen zwei Bauteilen lange dauern wenn die Verbindungspunkte nur zeitlich nacheinander hergestellt werden können.

Unter anderem aus US 6,534,194 B2 und US 6,736,942 B2 ist ein Verfahren zum thermischen Fügen von Bauteilen bekannt dass aktivierbare reaktive Folien, sogenannte Nanofolien, verwendet. Nanofolien sind aus abwechselnden Schichtfolgen von oft tausenden Aluminium- und Nickelfolien geringster Materialstärke aufgebaut, können zwischen die zu fügenden Bauteile platziert werden und erzeugen bei Aktivierung gut örtlich lokalisierte Prozesswärme.

Bauteilverbunde die Verbindungsstücke zum Verbinden der Bauteile verwenden sind auch aus DE 10 2004 025492 A1, GB 567 418 A und DE 32 10 310 A1 bekannt. Die Verwendung von Nanofolie als Schweißtechnologie ist aus der US 2005/051607 A1 bekannt.

### Zusammenfassung der Erfindung

Es ist eine Aufgabe der Erfindung, einen Bauteilverbund umfassend einen ersten Bauteil und einen zweiten Bauteil anzugeben, der einfach und prozesssicher hergestellt werden kann, und dabei eine sichere Verbindung der Bauteile ermöglicht. Es ist auch eine Aufgabe der Erfindung ein einfaches Verfahren zur Herstellung eines solchen Bauteilverbunds anzugeben.

Die Lösung der Aufgabe erfolgt durch einen Bauteilverbund umfassend einen ersten Bauteil und einen zweiten Bauteil, weiters umfassend mehrere Verbindungsstücke, wobei die Verbindungsstücke jeweils zumindest über die gesamte Dicke des ersten Bauteils den ersten Bauteil durchdringen, wobei die Verbindungsstücke an ihrem dem zweiten Bauteil zugewandten Ende mit dem zweiten Bauteil oder mit am zweiten Bauteil festgelegten weiteren Verbindungsstücken mittels einer gemeinsamen reaktiven Folie für die mehreren Verbindungsstücke, insbesondere einer Nanofolie, verschweißt sind.

Ein erfindungsgemäßes Verfahren zur Herstellung eines Bauteilverbunds sieht vor, dass mehrere Verbindungsstücke in den ersten Bauteil eingebracht werden und danach der zweite Bauteil zum ersten Bauteil positioniert wird und danach die Verbindungsstücke mit dem zweiten Bauteil und/oder mit am zweiten Bauteil festgelegten weiteren Verbindungsstücken mittels einer gemeinsamen reaktiven Folie für die mehreren Verbindungsstücke verschweißt werden.

Erfindungsgemäß weist der erste Bauteil, beispielsweise eine faserverstärkte Kunststoffplatte, zumindest mehrere -bevorzugt auch viele- Verbindungsstücke auf, die durch den ersten Bauteil getrieben sind oder auch bereits bei der Herstellung des ersten Bauteils in diese eingearbeitet wurden. Diese Verbindungsstücke können beispielsweise durch die Wahl eines geeigneten Materials dazu optimiert sein, mittels einer reaktiven Folie, die auf eine Oberfläche der Verbindungsstücke aufgebracht ist, mit einem zweiten Bauteil verbunden zu werden. In einem erfindungsgemäßen Bauteilverbund sind die Verbindungsstücke mittels der reaktiven Folie direkt mit dem zweiten Bauteil gefügt oder auch über weitere Verbindungsstücke indirekt mit dem zweiten Bauteil gefügt.

Die weiteren Verbindungsstücke können insbesondere das zweite Bauteil durchdringen und können beispielsweise gleich aufgebaut sein wie die Verbindungsstücke die den ersten Bauteil durchdringen.

Wenn die Verbindungsstücke die den ersten Bauteil durchdringen auch den zweiten Bauteil fast oder ganz durchdringen können die Verbindungsstücke mit der dem ersten Bauteil abgewandten Oberfläche des zweiten Bauteils verschweißt sein. Vorzugsweise kann ein weiteres Verbindungsstück, beispielsweise eine Scheibe, die durch ein den zweiten Bauteil durchdringendes Verbindungsstück entstehende Öffnung auf der dem ersten Bauteil abgewandten Seite des zweiten Bauteils abdecken, und die reaktive Folie zwischen dem Verbindungsstück und dem weiteren Verbindungsstück bzw. der Scheibe positioniert und dort verschweißt sein. Durch die kurzzeitige und örtlich begrenzte Erwärmung des Fügeverfahrens kann ein erfindungsgemäßer Bauteilverbund Bauteile und Verbindungsstücke verwenden, die durch andere Fügeverfahren zu stark beansprucht würden. Auch wird erfindungsgemäß die reaktive Folie an vielen Positionen, nämlich an vielen Verbindungsstücken, verwendet und stellt so einen Bauteilverbund mit einer großen Anzahl von Verbindungspunkten mit gleichmäßig hoher Qualitätbereit.

Weiterbildungen der Erfindung sind in den abhängigen Ansprüchen, der Beschreibung sowie den beigefügten Zeichnungen angegeben.

Insbesondere ist das erste Bauteil eine Platte oder ein Formteil und/oder das zweite Bauteil eine Platte oder ein Formteil. Unter Platte oder Formteil sind nicht nur flache bzw. im Wesentlichen in einer Ebene verlaufende Teile zu verstehen, sondern auch Strukturbauteile bzw. formgestaltete Teile wie beispielsweise Press-, Schmiede- und Zugteile oder Profilstangen oder Blechformen oder örtlich gequetschte Rohre oder Gussformen und ähnliches.

Die Verbindungsstücke können zylinderförmig, stiftförmig oder als Stift mit Kopf ausgebildet sein, ebenso gegebenenfalls die weiteren Verbindungsstücke, die zusätzlich auch als Scheibe oder Platte ausgeführt sein können. Formen ohne Kopf sind besonders geeignet für Verbindungen von drei Bauteilen, wo der erste Bauteil also einerseits mit einem zweiten Bauteil und am anderen Ende des Verbindungsstückes mit einem dritten Bauteil, oder beispielsweise einer Scheibe, verschweißt wird. Formen des Verbindungsstückes mit Kopf sind wiederum besonders geeignet für nur einseitige Verschweißung des Verbindungsstückes, wobei der Kopf an der gegenüberliegenden Seite des ersten Bauteils an diesem anliegen kann und den ersten Bauteil an diesem Ende gegen axiales Verschieben sichern kann.

Die Verbindungsstücke und/oder die weiteren Verbindungsstücke können je nach verwendeten Bauteilen bevorzugt aus Metall, insbesondere aus Buntmetall, Stahl oder Aluminium oder auch aus Kunststoff bestehen.

Bevorzugt besteht der erste Bauteil aus Kunststoff oder Faserverbund und ist insbesondere eine Kunststoffplatte oder eine Faserverbundplatte.

Bevorzugt besteht der zweite Bauteil aus Metall oder aus Kunststoff oder aus einem Faserverbundmaterial und ist insbesondere eine Metallplatte, ein Metallblech, eine Kunststoffplatte oder eine Faserverbundplatte.

Erfindungsgemäß kann so beispielsweise eine Verbindung zwischen verschiedenen Materialien, nämlich insbesondere zwischen Kunststoff bzw. Faserverbund auf der einen Seite und Metall auf der anderen Seite hergestellt werden.

Bevorzugt weist die reaktive Folie an ihrer Unterseite und/oder an ihrer Oberseite eine Klebeschicht auf. Somit kann die reaktive Folie auf einfache Weise auf ein Verbindungsstück geklebt werden.

Bevorzugt sind die Verbindungsstücke stoffschlüssig und/oder formschlüssig mit dem ersten Bauteil verbunden, insbesondere drehfest verbunden.

Bevorzugt sind die weiteren Verbindungsstücke stoffschlüssig und/oder formschlüssig am zweiten Bauteil festgelegt oder die weiteren Verbindungsstücke liegen auf dem zweiten Bauteil auf und sind erst durch deren Verschweißung mit den den ersten Bauteil durchdringenden Verbindungsstücken kraftschlüssig am zweiten Bauteil festgelegt.

Gemäß einer Ausführungsform sind die Verbindungsstücke zylinderförmig oder stiftförmig ausgeführt und an einem Ende mit dem zweiten Bauteil und am entgegengesetzten Ende mit einem dritten Bauteil, insbesondere an beiden Enden mit einem Metallblech, verschweißt.

Gemäß einer anderen Ausführungsform der Erfindung sind die Verbindungsstücke als Stift mit Kopf ausgeführt und an dem Ende, an welchem die Verbindungsstücke keinen Kopf aufweisen, mit dem zweiten Bauteil, insbesondere einem Metallblech verschweißt.

In einer weiteren Ausführungsform sind die Verbindungsstücke als Stift mit Kopf ausgeführt und an dem Ende, an welchem die Verbindungsstücke keinen Kopf aufweisen, mit den zweiten Bauteil durchdringenden weiteren Verbindungsstücken verschweißt.

In einem erfindungsgemäßen Bauteilverbund können auch zusätzlich zum ersten Bauteil ein oder mehrere Zusatz-Bauteile, insbesondere weitere Platten oder Formteile, an den Verbindungsstücken angeordnet sein, so dass die Verbindungsstücke zumindest über die gesamte Dicke des ersten Bauteils und der Zusatz-Bauteile diese durchdringen. Die Verbindungsstücke können dann mit dem zweiten Bauteil und gegebenenfalls am anderen Ende auch mit einem dritten Bauteil verschweißt sein.

In einem erfindungsgemäßen Verfahren zur Herstellung eines Bauteilverbunds können auch mehrere, insbesondere viele Verbindungsstücke in den ersten Bauteil eingebracht werden und danach der zweite Bauteil zum ersten Bauteil positioniert werden und danach die Verbindungsstücke mit dem zweiten Bauteil und/oder mit am zweiten Bauteil festgelegten weiteren Verbindungsstücken mittels einer reaktiven Folie, insbesondere einer Nanofolie, verschweißt werden. Erfindungsgemäß kann eine gemeinsame reaktive Folie für mehrere Verbindungsstücke verwendet werden, wobei die Zusammensetzung der Folie örtlich unterschiedlich sein kann, angepasst an die Positionen der Verbindungsstücke oder für die Weiterleitung der Zündenergie.

Die für mehrere Verbindungsstücke gemeinsame reaktive Folie kann derart ausgeführt sein, dass diese nach deren Aktivierung örtlich unterschiedliche Prozessenergien bzw. Prozesswärme erzeugt, sodass diese in Bereichen, in denen zwischen den Bauteilen keine Verbindungsstücke angeordnet sind, für die Bauteile unkritische bzw. geringere Prozessenergien bzw. Prozesswärmen erzeugt und in Bereichen, in denen sich die Verbindungsstücke befinden, höhere bzw. für das Verschweißen der Bauteile und Verbindungsstücke ausreichende Prozessenergien bzw. Prozesswärmen erzeugt.

Bevorzugt werden die reaktiven Folien maschinell auf die Verbindungsstücke im ersten Bauteil aufgebracht.

Die reaktiven Folien können beispielsweise von einer geeigneten Vorrichtung einem Satz von Nanofolien, der auf einer nicht elektrisch leitenden Trägerfolie bereitgestellt sein kann, entnommen werden und auf die Verbindungsstücke geklebt werden.

Durch Temperatureintrag, Druck oder elektrische Spannung können die reaktiven Folien aktiviert werden.

### Kurzbeschreibung der Zeichnungen

Die Erfindung wird im Folgenden beispielhaft unter Bezugnahme auf die Zeichnungen beschrieben.
- Fig. 1a: ist eine schematische Darstellung von reaktiven Folien von der Seite.
- Fig. 1b: ist eine schematische Darstellung gem. Fig. 1a von oben.
- Fig. 2a: ist eine schematische Darstellung eines erfindungsgemäßen Bauteilverbunds vor dem Fügen von der Seite.
- Fig. 2b: ist eine schematische Darstellung gem. Fig. 2a von oben.
- Fig. 3: ist eine schematische Darstellung gem. Fig. 2a nach dem Fügen.
- Fig. 4: ist eine schematische Darstellung eines weiteren erfindungsgemäßen Bauteilverbunds von der Seite.
- Fig. 5: ist eine schematische Darstellung eines weiteren erfindungsgemäßen Bauteilverbunds von der Seite.
- Fig. 6: ist eine schematische Darstellung eines weiteren erfindungsgemäßen Bauteilverbunds vor dem Fügen von der Seite.

### Detaillierte Beschreibung der Erfindung

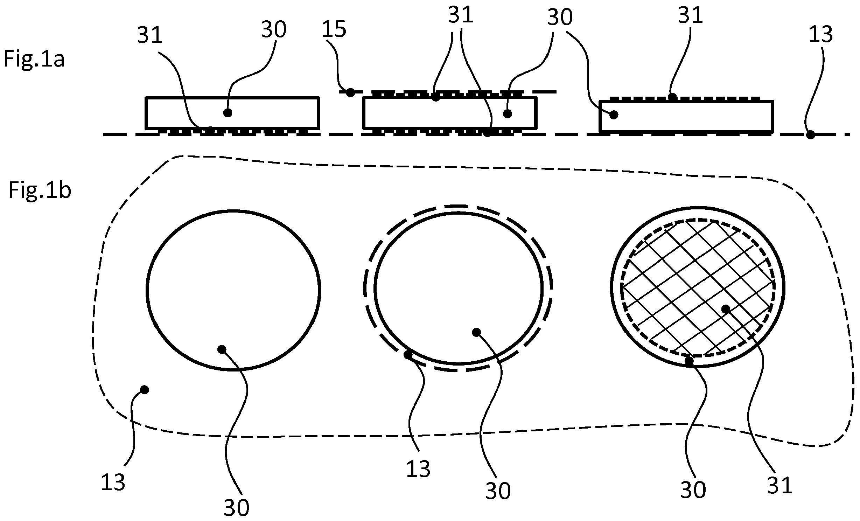

In den Fig. 1a und 1b sind reaktive Folien 30 dargestellt, die für ein erfindungsgemäßes Verfahren zum Herstellen eines Bauteilverbunds genutzt werden können. Mehrere reaktive Folien 30 sind für den Transport auf einer dünnen, elektrisch nicht leitenden Trägerfolie 13 angeordnet. Die reaktiven Folien 30 sind einseitig oder zweiseitig bereits mit einer Klebeschicht 31 ausgestattet, die das spätere Aufkleben auf ein Verbindungsstück vereinfacht. Auf die Klebeschicht 31 der in der Mitte von Fig. 1a dargestellten reaktiven Folie 30 ist eine Abdeckfolie 15 aufgebracht.

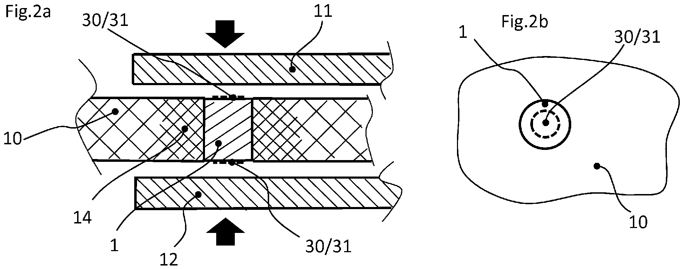

Wie in Fig. 1b zu sehen sind die reaktiven Folien 30 rund ausgeführt. Fig. 2a zeigt einen erfindungsgemäßen Bauteilverbund vor dem Fügen. In eine faserverstärkte Kunststoffplatte als erstes Bauteil 10 sind mehrere Verbindungsstücke eingebracht, wovon ein zylinderförmiges Verbindungsstück 1 gezeigt ist, mit an beiden Enden aufgeklebten reaktiven Folien 30. Die Höhe des Verbindungsstückes 1 entspricht in etwa der Höhe des ersten Bauteils 10, wobei bei Aktivierung der reaktiven Folie 30 durch Druck die Höhe des Verbindungsstückes 1 eher größer gewählt wird, also auch über den ersten Bauteil 10 vorstehen kann, bei Aktivierung mittels Temperatur oder elektrischer Spannung etwas kleiner, jedoch zumindest entsprechend der Dicke des ersten Bauteils 10 minus der Dicke der reaktiven Folie 30. Mittels Aktivierung der reaktiven Folie 30, beispielsweise durch Druck in Richtung der dargestellten Pfeile oder durch Temperatur, werden zwei metallische Bleche als zweites bzw. drittes Bauteil 11, 12 zu beiden Seiten des ersten Bauteils 10 an diesem fixiert. Das Verbindungsstück 1 ist in den ersten Bauteil 10 eingewoben, so dass es zu einer Verdichtung 14 der Fasern im Bereich um das Verbindungsstück 1 kommt.

Fig. 2b zeigt eine Draufsicht auf die faserverstärkte Kunststoffplatte als erstes Bauteil 10 mit dem eingebrachten runden Verbindungsstück 1 und reaktiver Folie 30 mit Klebeschicht 31. Die reaktive Folie 30 hat nicht erfindungsgemäß einen geringeren Radius als das Verbindungsstück 1.

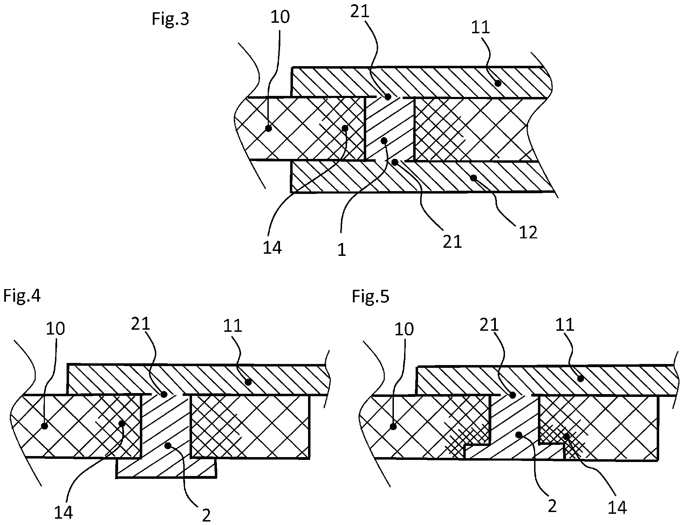

Fig. 3 zeigt den Bauteilverbund entsprechend Fig. 2a nach erfolgtem Fügevorgang. Zwischen dem ersten Bauteil 10 und dem zweiten bzw. dritten Bauteil 11, 12 sind jeweils Schweißzonen 21 ausgebildet.

In Fig. 4 und Fig. 5 sind jeweils Ausführungsformen eines Bauteilverbundes mit einem ersten Bauteil 10 und lediglich einseitig des ersten Bauteils 10 einem gefügten zweiten Bauteil 11, beispielsweise einem Metallblech. Zur Verbindung der Bauteile dient ein Verbindungsstück 2, dass als Stift mit Kopf ausgeführt ist und an dem Ende, an welchem das Verbindungsstück 2 keinen Kopf aufweist, mit dem zweiten Bauteil 11 verschweißt ist und dort eine Schweißzone 21 bildet. Dabei kann der Kopf des Verbindungsstückes auf dem ersten Bauteil 10 aufliegen, Fig. 4, oder auch bündig mit dem ersten Bauteil 10 abschließen, Fig. 5.

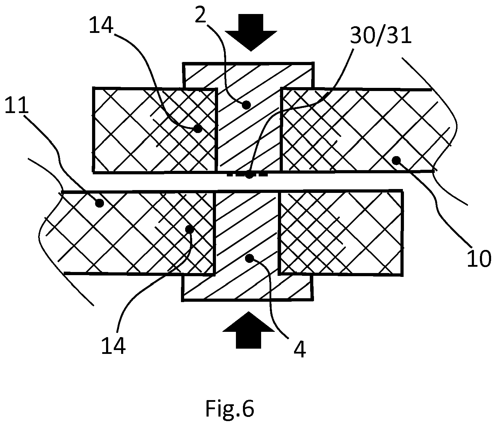

In der Ausführungsform gemäß Fig. 6 wird ein erstes Bauteil 10 mit einem zweiten Bauteil 11 derart verbunden, dass im ersten Bauteil 10 ein Verbindungsstück 2 als Stift mit Kopf ausgeführt ist und an dem Ende, an welchem das Verbindungsstück 2 keinen Kopf aufweist, das Verbindungstück 2 mit einem den zweiten Bauteil 11 durchdringenden weiteren Verbindungsstück 4 verschweißt wird. Beide Bauteile 10, 11 weisen daher bereits vor dem Fügen eingebrachte, beispielsweise mitgewobene Verbindungsstücke 2, 4 auf, so dass sie jeweils Verdichtungen 14 um die Verbindungsstücke aufweisen. Bei beiden Bauteilen 10,11 kann es sich um faserverstärkte Kunststoffplatten handeln.

### Bezugszeichenliste

- 1, 2: Verbindungsstück
- 4: weiteres Verbindungsstück
- 10: erstes Bauteil
- 11: zweites Bauteil
- 12: drittes Bauteil
- 13: Trägerfolie
- 14: Verdichtung
- 15: Abdeckfolie
- 21: Schweißzone
- 30: reaktive Folie
- 31: Klebeschicht

## Patentansprüche

1. Bauteilverbund umfassend einen ersten Bauteil (10) und einen zweiten Bauteil (11), weiters umfassend mehrere Verbindungsstücke (1, 2), wobei die Verbindungsstücke (1, 2) jeweils zumindest über die gesamte Dicke des ersten Bauteils (10) den ersten Bauteil (10) durchdringen,
**dadurch gekennzeichnet, dass** die Verbindungsstücke (1, 2) an ihrem dem zweiten Bauteil (11) zugewandten Ende mit dem zweiten Bauteil (11) oder mit am zweiten Bauteil (11) festgelegten weiteren Verbindungsstücken (4) mittels einer gemeinsamen reaktiven Folie (30) für die mehreren Verbindungsstücke (1, 2), insbesondere einer Nanofolie, verschweißt sind.

2. Bauteilverbund nach Anspruch 1,
**dadurch gekennzeichnet, dass** die am zweiten Bauteil (11) festgelegten weiteren Verbindungsstücke (4) den zweiten Bauteil (11) durchdringen oder jeweils eine Öffnung auf der dem ersten Bauteil (10) abgewandten Seite des zweiten Bauteils (11) abdecken.

3. Bauteilverbund nach Anspruch 1 oder 2,
**dadurch gekennzeichnet, dass** das erste Bauteil (10) eine Platte oder ein Formteil ist und/ oder das zweite Bauteil (11) eine Platte oder ein Formteil ist.

4. Bauteilverbund nach zumindest einem der vorhergehenden Ansprüche,
**dadurch gekennzeichnet, dass** die Verbindungsstücke (1, 2) und/oder die weiteren Verbindungsstücke (4) zylinderförmig, stiftförmig oder als Stift mit Kopf ausgebildet sind.

5. Bauteilverbund nach zumindest einem der vorhergehenden Ansprüche,
**dadurch gekennzeichnet, dass** die Verbindungsstücke (1, 2) und/oder die weiteren Verbindungsstücke (4) aus Metall, insbesondere aus Buntmetall, Stahl oder Aluminium oder aus Kunststoff bestehen.

6. Bauteilverbund nach zumindest einem der vorhergehenden Ansprüche,
**dadurch gekennzeichnet, dass** das erste Bauteil (10) aus Kunststoff oder aus einem Faserverbundmaterial besteht, insbesondere eine Kunststoffplatte oder eine Faserverbundplatte ist.

7. Bauteilverbund nach zumindest einem der vorhergehenden Ansprüche,
**dadurch gekennzeichnet, dass** das zweite Bauteil (11) aus Metall oder aus Kunststoff oder aus einem Faserverbundmaterial besteht, insbesondere eine Metallplatte, ein Metallblech, eine Kunststoffplatte oder eine Faserverbundplatte ist.

8. Bauteilverbund nach zumindest einem der vorhergehenden Ansprüche,
**dadurch gekennzeichnet, dass** die reaktive Folie (30) an ihrer Unterseite und/oder an ihrer Oberseite eine Klebeschicht (31) aufweist.

9. Bauteilverbund nach zumindest einem der vorhergehenden Ansprüche,
**dadurch gekennzeichnet, dass** die Verbindungsstücke (1, 2) stoffschlüssig und/oder formschlüssig mit dem ersten Bauteil (10) verbunden sind.

10. Bauteilverbund nach zumindest einem der vorhergehenden Ansprüche,
**dadurch gekennzeichnet, dass** die Verbindungsstücke (1, 2) zylinderförmig oder stiftförmig ausgeführt sind und an einem Ende mit dem zweiten Bauteil (11) und am entgegengesetzten Ende mit einem dritten Bauteil (12), insbesondere an beiden Enden mit einem Metallblech, verschweißbar sind.

11. Bauteilverbund nach zumindest einem der Ansprüche 1 bis 9,
**dadurch gekennzeichnet, dass** die Verbindungsstücke (1, 2) als Stift mit Kopf ausgeführt sind und an dem Ende, an welchem die Verbindungsstücke (1, 2) keinen Kopf aufweisen, mit dem zweiten Bauteil (11), insbesondere einem Metallblech, verschweißt sind.

12. Bauteilverbund nach zumindest einem der Ansprüche 1 bis 9,
**dadurch gekennzeichnet, dass** die Verbindungsstücke (1, 2) als Stift mit Kopf ausgeführt sind und an dem Ende, an welchem die Verbindungsstücke (1, 2) keinen Kopf aufweisen, mit den zweiten Bauteil (11) durchdringenden weiteren Verbindungsstücken (4) verschweißt sind.

13. Bauteilverbund nach zumindest einem der vorgehenden Ansprüche, **dadurch gekennzeichnet, dass** zusätzlich zum ersten Bauteil (10) ein oder mehrere Zusatz-Bauteile, insbesondere weitere Platten oder Formteile, an den Verbindungsstücken (1,2) angeordnet sind, so dass die Verbindungsstücke (1, 2) zumindest über die gesamte Dicke des ersten Bauteils (10) und der Zusatz-Bauteile diese durchdringen und mit dem zweiten Bauteil (11) verschweißt sind.

14. Bauteilverbund nach zumindest einem der vorgehenden Ansprüche, **dadurch gekennzeichnet, dass** die Zusammensetzung der reaktiven Folie (30) örtlich unterschiedlich ist, insbesondere in Bereichen, in denen zwischen den Bauteilen (10, 11) keine Verbindungsstücke (1, 2) angeordnet sind anders als in Bereichen, in denen sich die Verbindungsstücke (1, 2) befinden.

15. Verfahren zur Herstellung eines Bauteilverbunds nach zumindest einem der Ansprüche 1 bis 14,
**dadurch gekennzeichnet, dass** mehrere Verbindungsstücke (1, 2) in den ersten Bauteil (10) eingebracht werden und danach der zweite Bauteil (11) zum ersten Bauteil (10) positioniert wird und danach die Verbindungsstücke (1, 2) mit dem zweiten Bauteil (11) und/ oder mit am zweiten Bauteil (11) festgelegten weiteren Verbindungsstücken (4) mittels einer gemeinsamen reaktiven Folie (30) für die mehreren Verbindungsstücke verschweißt werden.

16. Verfahren nach Anspruch 15,
**dadurch gekennzeichnet, dass** die reaktive Folie (30) maschinell auf die Verbindungsstücke (1, 2) im ersten Bauteil (10) aufgebracht wird.

17. Verfahren nach zumindest einem der Ansprüche 15 bis 16,
**dadurch gekennzeichnet, dass** die reaktive Folie (30) durch Temperatureintrag, Druck oder elektrische Spannung aktiviert wird.

## Claims

1. Component assembly comprising a first component (10) and a second component (11), further comprising a plurality of connection pieces (1, 2), the connection pieces (1, 2) each penetrating the first component (10) at least over the entire thickness of the first component (10), **characterized in that** that end of the connection pieces (1, 2) which faces towards the second component (11) is welded to the second component (11) or to further connection pieces (4) fixed on the second component (11) by means of a common reactive foil (30) for the plurality of connection pieces (1, 2), in particular a nanofoil.

2. Component assembly according to Claim 1, **characterized in that** the further connection pieces (4) fixed on the second component (11) penetrate the second component (11) or each cover an opening on that side of the second component (11) which is remote from the first component (10).

3. Component assembly according to Claim 1 or 2, **characterized in that** the first component (10) is a plate or a shaped part and/or the second component (11) is a plate or a shaped part.

4. Component assembly according to at least one of the preceding claims,
**characterized in that** the connection pieces (1, 2) and/or the further connection pieces (4) have a cylindrical form or a pin-like form or are in the form of a pin with a head.

5. Component assembly according to at least one of the preceding claims,
**characterized in that** the connection pieces (1, 2) and/or the further connection pieces (4) consist of metal, in particular of non-ferrous metal, steel or aluminium or of plastic.

6. Component assembly according to at least one of the preceding claims,
**characterized in that** the first component (10) consists of plastic or of a fibre composite material, in particular is a plastics plate or a fibre composite plate.

7. Component assembly according to at least one of the preceding claims,
**characterized in that** the second component (11) consists of metal or of plastic or of a fibre composite material, in particular is a metal plate, a metal sheet, a plastics plate or a fibre composite plate.

8. Component assembly according to at least one of the preceding claims,
**characterized in that** the bottom side and/or the top side of the reactive foil (30) has a bonding layer (31).

9. Component assembly according to at least one of the preceding claims,
**characterized in that** the connection pieces (1, 2) are connected to the first component (10) in an integral and/or positively locking manner.

10. Component assembly according to at least one of the preceding claims,
**characterized in that** the connection pieces (1, 2) have a cylindrical or pin-like configuration and can be welded at one end to the second component (11) and at the opposite end to a third component (12), in particular at both ends to a metal sheet.

11. Component assembly according to at least one of Claims 1 to 9,
**characterized in that** the connection pieces (1, 2) are configured as a pin with a head and are welded at that end at which the connection pieces (1, 2) do not have a head to the second component (11), in particular a metal sheet.

12. Component assembly according to at least one of Claims 1 to 9,
**characterized in that** the connection pieces (1, 2) are configured as a pin with a head and are welded at that end at which the connection pieces (1, 2) do not have a head to further connection pieces (4) penetrating the second component (11).

13. Component assembly according to at least one of the preceding claims,
**characterized in that**, in addition to the first component (10), one or more additional components, in particular further plates or shaped parts, are arranged on the connection pieces (1, 2), such that the connection pieces (1, 2) penetrate the first component (10) and the additional components and are welded to the second component (11) at least over the entire thickness of the first component (10) and of the additional components.

14. Component assembly according to at least one of the preceding claims, **characterized in that** the composition of the reactive foil (30) is locally different, in particular in regions in which no connection pieces (1, 2) are arranged between the components (10, 11) it is unlike in regions in which the connection pieces (1, 2) are located.

15. Process for producing a component assembly according to at least one of Claims 1 to 14,
**characterized in that** a plurality of connection pieces (1, 2) are introduced into the first component (10) and thereafter the second component (11) is positioned in relation to the first component (10) and thereafter the connection pieces (1, 2) are welded to the second component (11) and/or to further connection pieces (4) fixed on the second component (11) by means of a common reactive foil (30) for the plurality of connection pieces.

16. Process according to Claim 15,
**characterized in that** the reactive foil (30) is applied mechanically to the connection pieces (1, 2) in the first component (10).

17. Process according to at least one of Claims 15 to 16,
**characterized in that** the reactive foil (30) is activated by the introduction of temperature, pressure or electric voltage.

## Revendications

1. Composé d'éléments de construction comprenant un premier élément de construction (10) et un deuxième élément de construction (11), comprenant en outre plusieurs pièces de connexion (1, 2), les pièces de connexion (1, 2) traversant le premier élément de construction (10) à chaque fois sur au moins toute l'épaisseur du premier élément de construction (10),
**caractérisé en ce que** les pièces de connexion (1, 2) sont soudées au niveau de leur extrémité tournée vers le deuxième élément de construction (11) au deuxième élément de construction (11) ou à d'autres pièces de connexion (4) fixées au deuxième élément de construction (11) au moyen d'un film commun réactif (30) pour la pluralité de pièces de connexion (1, 2), en particulier un nanofilm.

2. Composé d'éléments de construction selon la revendication 1,
**caractérisé en ce que** les pièces de connexion supplémentaires (4) fixées au deuxième élément de construction (11) traversent le deuxième élément de construction (11) ou couvrent à chaque fois une ouverture sur le côté du deuxième élément de construction (11) opposé au premier élément de construction (10).

3. Composé d'éléments de construction selon la revendication 1 ou 2,
**caractérisé en ce que** le premier élément de construction (10) est une plaque ou une pièce façonnée et/ou le deuxième élément de construction (11) est une plaque ou une pièce façonnée.

4. Composé d'éléments de construction selon au moins l'une quelconque des revendications précédentes, **caractérisé en ce que** les pièces de connexion (1, 2) et/ou les pièces de connexion supplémentaires (4) sont réalisées sous forme cylindrique, en forme de goupille ou sous forme de goupille à tête.

5. Composé d'éléments de construction selon au moins l'une quelconque des revendications précédentes, **caractérisé en ce que** les pièces de connexion (1, 2) et/ou les pièces de connexion supplémentaires (4) se composent de métal, en particulier de métal lourd non ferreux, d'acier ou d'aluminium ou de plastique.

6. Composé d'éléments de construction selon au moins l'une quelconque des revendications précédentes, **caractérisé en ce que** le premier élément de construction (10) se compose de plastique ou d'un matériau composite renforcé par des fibres, en particulier d'une plaque en plastique ou d'une plaque en matériau composite renforcé par des fibres.

7. Composé d'éléments de construction selon au moins l'une quelconque des revendications précédentes, **caractérisé en ce que** le deuxième élément de construction (11) se compose de métal ou d'un plastique ou d'un matériau composite renforcé par des fibres, en particulier d'une plaque en métal, d'une tôle métallique, d'une plaque en plastique ou d'une plaque en matériau composite renforcé par des fibres.

8. Composé d'éléments de construction selon au moins l'une quelconque des revendications précédentes, **caractérisé en ce que** le film réactif (30) présente sur son côté inférieur et/ou sur son côté supérieur une couche adhésive (31).

9. Composé d'éléments de construction selon au moins l'une quelconque des revendications précédentes, **caractérisé en ce que** les pièces de connexion (1, 2) sont connectées par engagement par correspondance de formes et/ou par liaison de matière au premier élément de construction (10).

10. Composé d'éléments de construction selon au moins l'une quelconque des revendications précédentes, **caractérisé en ce que** les pièces de connexion (1, 2) sont réalisées sous forme cylindrique ou en forme de goupille et peuvent être soudées à une extrémité au deuxième élément de construction (11) et à l'extrémité opposée à un troisième élément de construction (12), en particulier aux deux extrémités à une tôle métallique.

11. Composé d'éléments de construction selon au moins l'une quelconque des revendications 1 à 9, **caractérisé en ce que** les pièces de connexion (1, 2) sont réalisées sous forme de goupille à tête et sont soudées, à l'extrémité à laquelle les pièces de connexion (1, 2) ne présentent pas de tête, au deuxième élément de construction (11), en particulier à une tôle métallique.

12. Composé d'éléments de construction selon au moins l'une quelconque des revendications 1 à 9, **caractérisé en ce que** les pièces de connexion (1, 2) sont réalisées sous forme de goupille à tête et sont soudées, à l'extrémité à laquelle les pièces de connexion (1, 2) ne présentent pas de tête, aux pièces de connexion supplémentaires (4) traversant le deuxième élément de construction (11).

13. Composé d'éléments de construction selon au moins l'une quelconque des revendications précédentes, **caractérisé en ce qu'**en plus du premier élément de construction (10), un ou plusieurs éléments de construction supplémentaires, en particulier des plaques ou des pièces façonnées supplémentaires, sont disposés au niveau des pièces de connexion (1, 2), de telle sorte que les pièces de connexion (1, 2) traversent le premier élément de construction (10) et les éléments de construction supplémentaires sur toute leur épaisseur et soient soudées au deuxième élément de construction (11).

14. Composé d'éléments de construction selon au moins l'une quelconque des revendications précédentes, **caractérisé en ce que** la composition du film réactif (30) est localement différente, en particulier dans les zones dans lesquelles aucune pièce de connexion (1, 2) n'est disposée entre les éléments de construction (10, 11) sauf dans les zones dans lesquelles se trouvent les pièces de connexion (1, 2).

15. Procédé de fabrication d'un composé d'éléments de construction selon au moins l'une quelconque des revendications 1 à 14, **caractérisé en ce que** plusieurs pièces de connexion (1, 2) sont introduites dans le premier élément de construction (10) et ensuite le deuxième élément de construction (11) est positionné par rapport au premier élément de construction (10) et ensuite les pièces de connexion (1, 2) sont soudées au deuxième élément de construction (11) et/ou à des pièces de connexion supplémentaires (4) fixées au deuxième élément de construction (11) au moyen d'un film réactif commun (30) pour la pluralité de pièces de connexion.

16. Procédé selon la revendication 15,
**caractérisé en ce que** le film réactif (30) est appliqué par machine sur les pièces de connexion (1, 2) dans le premier élément de construction (10).

17. Procédé selon au moins l'une quelconque des revendications 15 à 16,
**caractérisé en ce que** le film réactif (30) est activé par apport de température, pression ou tension électrique.
